# FASCICULE DE BREVET EUROPEEN

(11) **EP 0 499 545 B1**
(45) Date de publication et mention de la délivrance du brevet: **26.04.1995**
(21) Numéro de dépôt: 92400390.8
(22) Date de dépôt: 13.02.1992
(51) Int. Cl.: G01D 5/26

(54) **Récepteur de démultiplexage parallèle pour un réseau de capteurs optiques à codage de modulation spectrale**
Empfänger zum paralellen Demultiplexen für ein optisches Sensornetzwerk mit Spektralmodulationskodierung
Receiver for the parallel demultiplexing of an optical sensor network by spectral modulation coding

(30) Priorité: 14.02.1991 FR 9101732
(43) Date de publication de la demande: 19.08.1992
(73) Titulaire: BERTIN & CIE, F-78373 Plaisir Cédex (FR)
(72) Inventeur: Lequime, Michel, F-13510 Eguilles (FR); Sansonetti, Pierre, F-13090 Aix en Provence (FR)
(74) Mandataire: Ramey, Daniel

(56) Documents cités:
- EP-A- 0 191 588
- EP-A- 0 251 632
- EP-A- 0 347 277
- EP-A- 0 390 615
- DE-A- 1 773 471
- DE-A- 3 044 183
- FR-A- 2 643 730
- US-A- 4 799 797
- JOURNAL OF THE INSTITUTION OF ELECTRONIC AND RADIO ENGINEERS, vol. 58, no. 5, juillet 1988, London, GB, pages 99-111; KERSEY ET AL: "Distributed and multiplexed fibre-optic sensor systems"

## Description

L'invention concerne un récepteur de démultiplexage parallèle pour un réseau de capteurs optiques interférométriques à codage de modulation spectrale.

Ces capteurs comprennent par exemple chacun un cristal biréfringent placé entre un polariseur et un analyseur et soumis à une grandeur physique à mesurer, telle que la température. Chaque capteur est éclairé par un flux lumineux fourni par une source de lumière à faible longueur de cohérence, et dont le spectre est modulé périodiquement à la traversée du cristal à une fréquence qui est fonction de la différence de marche optique dans le cristal, elle-même fonction de la valeur de la grandeur physique à mesurer. Des fibres optiques relient ces capteurs d'une part à la source de lumière et d'autre part à des moyens d'analyse spectrale associés à des moyens de démultiplexage.

L'analyse spectrale peut être réalisée au moyen d'un spectromètre, mais il est plus avantageux pour le démultiplexage d'utiliser un interféromètre à différence de marche optique variable que l'on accorde successivement sur les diverses différences de marche générées dans les capteurs. Une telle solution est par exemple décrite dans le document EP-A-0 347 277.

Lorsque ces différences de marche sont supérieures à la longueur de cohérence de la source de lumière, et que leurs différences sont également supérieures à cette longueur de cohérence, on obtient en sortie de l'interféromètre récepteur, pour chaque capteur, un signal sinusoïdal dont la phase est proportionnelle à la différence entre la différence de marche générée par ce capteur et celle générée par l'interféromètre accordé sur ce capteur (la différence entre la différence de marche du capteur et celle de l'interféromètre devant être inférieure à la longueur de cohérence de la source).

La mesure de la phase de ce signal permet d'obtenir la différence de marche dans le capteur (la différence de marche dans l'interféromètre récepteur étant connue), et donc la valeur de la grandeur physique à laquelle est soumis le capteur, moyennant un étalonnage préalable.

Il est cependant relativement peu rapide d'accorder l'interféromètre successivement sur tous les capteurs, et cela demande des moyens et des manipulations supplémentaires.

Une autre solution consiste à raccorder l'ensemble de capteurs à un ensemble d'interféromètres récepteurs, dont chacun est accordé sur un capteur, mais cela impose d'utiliser autant d'interféromètres récepteurs que de capteurs et augmente de façon importante le coût du système.

L'invention a pour objet un récepteur unique qui permet le démultiplexage automatique des signaux fournis par un réseau de capteurs du type précité.

L'invention a également pour objet un récepteur de ce type, qui peut être utilisé avec un réseau de capteurs intrinsèques quasi-répartis sur une fibre optique.

L'invention a encore pour objet un récepteur de ce type, qui peut être réalisé avec des techniques d'optique intégrée.

L'invention propose donc, à cet effet, un récepteur de démultiplexage parallèle pour un réseau de capteurs optiques interférométriques à codage de modulation spectrale qui sont éclairés par une source de lumière à faible longueur de cohérence pour générer des différences de marche fonctions des valeurs d'au moins une grandeur physique à laquelle ils sont soumis, ces différences de marche étant supérieures à la longueur de cohérence de la source de lumière et leurs différences étant également supérieures à cette longueur de cohérence, le réseau de capteurs transmettant un flux lumineux multiplexé à un récepteur de type interférométrique susceptible de générer des différences de marche correspondant à celles des capteurs, caractérisé en ce que ce récepteur comprend un système interférométrique unique dans lequel sont agencés des moyens générant simultanément les différences de marche précitées sur des fractions dudit flux lumineux, et des photodétecteurs de sortie pour recevoir lesdites fractions de flux lumineux sous forme de signaux interférométriques, dont chacun a une phase proportionnelle à la différence entre la différence de marche générée par un capteur associé et la différence de marche générée par les moyens précités dans une fraction correspondante du flux lumineux.

Ce récepteur permet de réaliser automatiquement un démultiplexage parallèle des signaux fournis par le réseau de capteurs en générant simultanément toutes les différences de marche accordées sur celles des capteurs. Un seul système interférométrique est nécessaire pour cela.

Selon une autre caractéristique de l'invention, le récepteur comprend un interféromètre de type Michelson à deux miroirs fixes dont l'un présente une série de zones réfléchissantes parallèles étagées situées à des niveaux différents, définissant les fractions précitées du flux lumineux et générant les différences de marche précitées.

Dans une variante de réalisation, le récepteur comprend un interféromètre de type Michelson à deux miroirs fixes, devant l'un desquels est placée une lame transparente à structure étagée, par exemple en verre, présentant des zones d'épaisseurs différentes traversées par le flux lumineux, qui définissent les fractions précitées de ce flux et génèrent les différences de marche précitées.

Avantageusement, dans l'une et l'autre de ces réalisations, les zones précitées sont formées de lames d'épaisseurs différentes, fixées sur un support par adhérence moléculaire.

Dans une autre forme de réalisation de l'invention, le récepteur comprend une lame de matériau biréfringent traversée par le flux lumineux passant dans le récepteur, cette lame étant à structure étagée pour présenter différentes épaisseurs définissant lesdites fractions du flux lumineux et générant les différences de marche précitées.

Les différentes épaisseurs de cette lame peuvent être formées par des lamelles de matériau biréfringent d'épaisseurs différentes, qui sont fixées par adhérence moléculaire sur un support avec une même orientation de leurs axes neutres.

De façon déjà connue, cette lame de matériau biréfringent peut être placée entre un polariseur et un analyseur dont les axes sont à 45° des axes du matériau biréfringent.

Selon une autre caractéristique de l'invention, le récepteur est constitué d'un circuit optique intégré comprenant un substrat biréfringent ou semi-conducteur pourvu des fonctions optiques nécessaires, réalisées par des techniques de diffusion, d'échange ionique, de bombardement ionique, d'attaque chimique ou autres.

Ce substrat porte également, de façon avantageuse, un circuit de modulation de phase du type électrooptique.

Les fonctions d'optique intégrée précitées peuvent comprendre une zone de biréfringence différente de celle du substrat et ayant différentes longueurs définissant lesdites fractions de flux lumineux et un coupleur de modes TE-TM associé à un polariseur aligné sur un axe neutre de cette zone de biréfringence, ou un analyseur orienté à 45° des axes neutres de cette zone.

Lorsque le substrat est en matériau semiconducteur, du type GaAs ou GaInAsP par exemple, il peut également porter des composants intégrés formant des photodétecteurs et un circuit de démodulation.

Les récepteurs selon l'invention peuvent être associés à des capteurs interférométriques agencés en échelle, en étoile, ou selon tout autre type de configuration de réseau, ou à des capteurs intrinsèques quasi-répartis sur une fibre optique propageant quelques modes ou à maintien de polarisation comme on le verra plus en détail dans ce qui suit.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement un réseau de capteurs à codage de modulation spectrale et les récepteurs associés, conformément à la technique antérieure;
- la figure 2 représente schématiquement un mode de réalisation d'un récepteur selon l'invention;
- la figure 3 représente schématiquement une partie de ce récepteur, selon une variante de réalisation;
- les figures 4 et 5 sont des vues de côté et en plan, respectivement, d'une lame multi-épaisseurs utilisée dans le récepteur de la figure 3;
- les figures 6 et 6 bis représentent schématiquement des récepteurs selon l'invention, réalisés sous forme de circuits d'optique intégrée;
- la figure 7 représente schématiquement un réseau de capteurs en étoile associé à un récepteur selon l'invention;
- les figures 8, 9 et 10 représentent des réseaux de capteurs intrinsèques quasi-répartis sur une fibre optique et associés à des récepteurs selon l'invention;
- la figure 11 représente schématiquement une variante de réalisation du récepteur selon l'invention;
- la figure 12 représente schématiquement un réseau de capteurs intrinsèques associé à une variante de ce récepteur;
- la figure 13 représente schématiquement un récepteur du même type que celui de la figure 11, mais réalisé sous forme de circuit optique intégré.

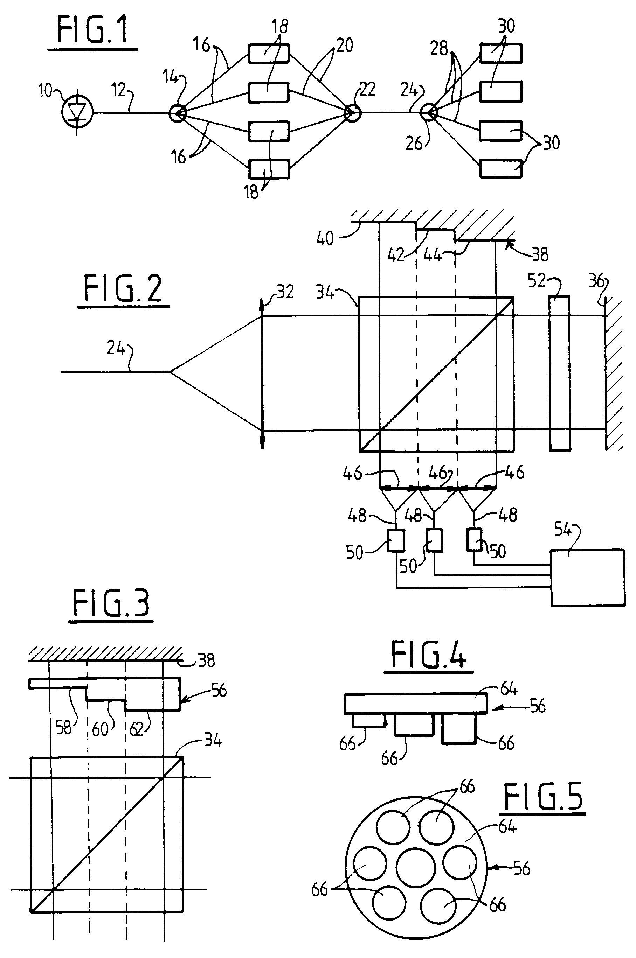

On a représenté schématiquement en figure 1, un réseau de capteurs à codage de modulation spectrale associé à des récepteurs conformément à la technique antérieure.

Le réseau de capteurs comprend une source de lumière 10 à faible longueur de cohérence, telle qu'une diode électroluminescente, qui est reliée par une fibre optique 12 à l'entrée d'un coupleur en étoile 14 lui-même relié par des fibres optiques 16 à des capteurs 18 à codage de modulation spectrale. Les sorties des capteurs 18 sont reliées par des fibres optiques 20 et un coupleur en étoile 22 à une fibre optique 24, qui mène jusqu'à un autre coupleur en étoile 26 relié par des fibres optiques 28 à des récepteurs 30 du type interférométrique, qui sont en nombre égal à celui des capteurs 18.

La source de lumière 10 émet un flux lumineux ayant une largeur spectrale relativement importante, qui est transmis par les fibres optiques 12 et 16 aux capteurs 18. Ces derniers sont soumis à au moins une grandeur physique que l'on souhaite mesurer et qui agit sur un élément sensible des capteurs, tel qu'un cristal biréfringent dans le cas de la température. On peut bien sûr utiliser tout autre type de capteur interférométrique (par exemple un interféromètre de Fabry-Perot ou de Michelson pour la mesure d'un déplacement, etc...). Le spectre du flux lumineux traversant chaque capteur est modulé périodiquement à une fréquence qui est une fonction de la différence de marche optique dans le capteur, celle-ci étant elle-même une fonction directe de la grandeur physique à mesurer. Les flux lumineux sortant des capteurs 18 sont transmis par les fibres 20, 24 et 28 aux récepteurs 30. Chaque récepteur est accordé sur un capteur, pour produire une différence de marche optique égale à la différence de marche optique moyenne dans le capteur correspondant.

Lorsque les différences de marche optique générées dans les capteurs 18 sont supérieures à la longueur de cohérence de la lumière émise par la source 10, et que les différences entre ces différences de marche sont également supérieures à cette longueur de cohérence, on réalise automatiquement un démultiplexage de cohérence et on obtient en sortie de chaque récepteur 30, lorsque la différence entre les différences de marche du capteur associé et du récepteur est inférieure à la longueur de cohérence de la source, un signal sinusoïdal dont la phase est proportionnelle à la différence entre la différence de marche générée dans le capteur 18 et celle générée dans le récepteur 30.

La mesure de cette phase permet donc d'obtenir la différence de marche optique générée dans le capteur et, grâce à un étalonnage préalable, la valeur de la grandeur physique agissant sur l'élément sensible du capteur.

Il faut cependant prévoir autant de récepteurs 30 que de capteurs 18.

On pourrait également utiliser un seul récepteur interférométrique 30 recevant tous les signaux des capteurs 18 et accorder sa différence de marche optique successivement sur toutes les différences de marche optique générées dans les capteurs.

On a représenté en figure 2 un premier mode de réalisation d'un récepteur interférométrique selon l'invention, qui permet de démultiplexer en parallèle tous les signaux reçus d'un ensemble de capteurs 18 à codage de modulation spectrale, dont les différences de marche optique sont supérieures à la longueur de cohérence de la lumière émise par la source 10, les différences entre ces différences de marche optique étant également supérieures à cette longueur de cohérence.

Dans l'exemple représenté en figure 2, le récepteur selon l'invention est constitué essentiellement d'un interféromètre de Michelson, qui comprend une lentille d'entrée 32, transformant en un faisceau de rayons parallèles le flux lumineux sortant d'une fibre optique 24 reliée au réseau de capteurs, un cube séparateur 34 dont le coefficient de transmission est égal au coefficient de réflexion, et deux miroirs 36 et 38 recevant respectivement le flux lumineux transmis et le flux lumineux réfléchi par le cube 34 et les réfléchissant dans la direction d'incidence.

Selon l'invention, la surface réfléchissante du miroir 38 comprend des zones parallèles 40, 42, 44, qui sont étagées et situées à des niveaux différents. Chacune de ces zones 40, 42, 44 reçoit une fraction du flux lumineux réfléchi par le cube séparateur 34 et génère une différence de marche optique qui intéresse uniquement cette fraction du flux lumineux.

Des lentilles 46 sont prévues en sortie de l'interféromètre pour recevoir chacune une fraction de flux lumineux définie par une zone réfléchissante 40, 42 ou 44, et la focaliser sur l'extrémité d'une fibre optique 48 reliée à un photodétecteur 50.

Les sorties des photodétecteurs sont reliées à des moyens de mesure de phase.

Le nombre de zones réfléchissantes 40, 42, 44 formées à des niveaux différents sur le miroir 38, de lentilles 46, et de photodétecteurs 50 est au moins égal au nombre de capteurs 18 à codage de modulation spectrale. Les signaux appliqués aux photodétecteurs 50 sont des signaux sinusoïdaux, dont les phases sont proportionnelles aux différences entre les différences de marche générées dans les capteurs et celles correspondantes générées dans l'interféromètre de Michelson. Des techniques classiques peuvent être utilisées pour mesurer ces phases, par exemple une technique du type "hétérodyne", consistant à appliquer une rampe de phase à ces signaux, ce qui génère un décalage en fréquence, et à mesurer les phases de ces signaux à la fréquence intermédiaire.

Une autre technique classique, appelée communément PGC ou "Phase Generated Carrier", consiste à appliquer une modulation sinusoïdale aux différences de marche générées dans l'interféromètre de réception. Une détection à la fréquence de modulation et au deuxième harmonique permet de déterminer le sinus et le cosinus de la phase, et donc la valeur de celle-ci. On peut également utiliser une multiplication par une fonction créneau et une détection au deuxième harmonique.

La modulation de phase dans l'interféromètre récepteur peut être réalisée par déplacement du miroir 36, ou par un modulateur de phase, tel que celui représenté en 52 en figure 2, qui est interposé entre le cube séparateur 34 et le miroir 36. Ce modulateur de phase peut être basé sur un effet électro-optique ou élasto-optique. Dans ce cas, une lame de même matériau et de même épaisseur que le modulateur de phase, peut être placée dans l'autre bras de l'interféromètre pour supprimer l'effet de la dispersion chromatique.

Les sorties des photodétecteurs 50 sont alors reliées aux entrées d'un circuit de démodulation 54.

La figure 3 représente une variante de réalisation de l'interféromètre récepteur selon l'invention, dans laquelle une lame 56 de matière transparente est interposée entre le miroir 38 et le cube séparateur 34, les autres composants de l'interféromètre étant identiques à ceux représentés en figure 2.

Dans ce cas, le miroir 38 est à surface réfléchissante plane, et la lame 56 présente des zones parallèles étagées 58, 60, 62, définissant différentes épaisseurs de la lame 56. Ces zones étagées 58, 60, 62 correspondent aux zones 40, 42, 44 du miroir 38 de la figure 2 et définissent des fractions du flux lumineux incident sur le miroir 38, dans lesquelles elles génèrent des différences de marche optique qui sont accordées sur les valeurs moyennes des différences de marche optique générées dans les capteurs 18.

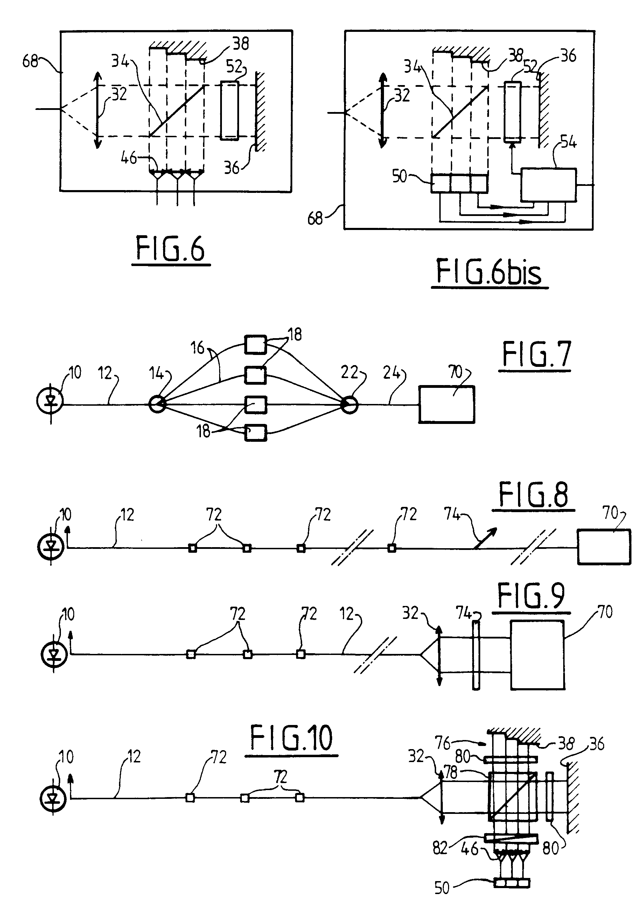

On a représenté dans les figures 4 et 5 un mode de réalisation de la lame transparente 56. Celle-ci est composée d'une lame support 64 d'épaisseur constante, sur une face de laquelle on fixe des lamelles 66 ayant des épaisseurs différentes. Avantageusement, ces lamelles 66 sont fixées sur la lame support 64 par adhérence moléculaire, ce qui évite d'utiliser des matières adhésives ou analogues. Lorsque les faces des lames sont suffisamment planes et ont un très bon état de surface (de l'ordre de λ/4 par exemple), l' application des lames sur la lame support assure leur fixation sur cette dernière par adhérence moléculaire. Cela assure de plus le parallélisme des lames entre elles..

Les lames 64, 66 sont de préférence en verre (BK7 par exemple) ou en toute autre matière appropriée.

Pour obtenir la meilleure compacité possible, les lames 66 peuvent être agencées en "toron" sur la lame support 64, comme représenté en figure 5. Pour fixer les idées, on précisera à titre d'exemple que le diamètre de chaque lame ou lamelle 66 peut être de l'ordre de 5 mm, le diamètre de la lame support 64 étant alors supérieur à 15 mm. Le nombre de lames 66 est de 7 dans l'exemple représenté, il peut être de 19 (nombre supérieur dans la configuration en toron) ou davantage. On peut également utiliser une disposition différente des lames 64, en carré, en rectangle etc. Les différences d'épaisseurs des lames ou lamelles 66 sont égales à la moitié des différences entre les différences de marche optique que l'on veut générer. Si ces différences sont de l'ordre de 150 »m, les différences d'épaisseur entre des lames ou lamelles 66 sont de 75 »m. On peut disposer dans l'autre bras de l'interféromètre, une lame de même matériau et de même épaisseur que la lame support, pour supprimer l'effet de la dispersion chromatique.

Le miroir 38 de la figure 2 peut bien entendu être réalisé également par adhérence moléculaire de lamelles de différentes épaisseurs sur un support. Un traitement réflecteur peut être déposé préalablement sur chaque lamelle, ou bien ultérieurement sur l'ensemble des zones étagées du miroir 38.

Le fonctionnement du récepteur de la figure 3 est identique à celui du récepteur de la figure 2.

Les récepteurs interférométriques selon l'invention qui viennent d'être décrits, peuvent être réalisés avec des techniques d'optique intégrée. Ils comprennent alors, comme dans l'exemple représenté en figure 6, un substrat 68 de matière appropriée, permettant la réalisation de fonctions optiques monomodes. L'un des avantages des fonctions optiques intégrées monomodes est la simplicité de la modulation de phase par effet électro-optique. On peut utiliser dans ce cas des substrats en matière de type LiNbO3 ou LiTaO3. Les guides optiques sont alors réalisés par diffusion de titane et/ou par échange protonique.

Les faces réfléchissantes des miroirs 36 et 38, ainsi que la lame séparatrice 34 peuvent être réalisées par des techniques d'attaque chimique, de bombardement ionique ou de bombardement ionique réactif, avec éventuellement un dépôt de matière réfléchissante. Le composant 52 de modulation de phase par effet électro-optique est réalisé par dépôt d'une électrode. Les lentilles 32 et 46 sont réalisées par des techniques classiques d'optique intégrée (lentilles de Fresnel par exemple). En variante, l'ensemble lentilles 46 - fibres 48 - détecteurs 50 peut être avantageusement remplacé par une barrette de détecteurs CCD.

On peut également utiliser un substrat 68 en matériau semi-conducteur, du type GaAs ou GaInAsP par exemple, ce qui permet de réaliser non seulement les fonctions de type guide optique, mais également les fonctions de modulation, détection et démodulation, comme cela a été représenté dans l'exemple de la figure 6 bis, où le substrat 68 porte également les photodétecteurs 50 et le circuit de démodulation 54. Dans ce cas, les lentilles 46 ne sont pas nécessaires, la détection pouvant avoir lieu directement sur une barrette de photodétecteurs 50 réalisés sur le substrat.

Un premier exemple d'application des récepteurs interférométriques selon l'invention est représenté en figure 7 pour un réseau en étoile de capteurs 18 à codage de modulation spectrale.

Ce réseau a la même structure que celui représenté en figure 1, et comprend donc une source 10 de lumière à faible longueur de cohérence, reliée par les fibres optiques 12, le coupleur 14 et les fibres optiques 16 aux capteurs 18 à codage de modulation spectrale, dont les sorties sont reliées par les fibres optiques 20 et un coupleur en étoile 22 à la fibre optique 24 menant au récepteur 70 selon l'invention, qui peut être du type représenté en figure 2, ou en figure 3 ou encore en figure 6. Ce récepteur est conçu pour générer autant de différences de marche qu'il y a de capteurs dans le réseau.

Les fibres optiques de liaison, ainsi que les coupleurs, peuvent être monomodes ou multimodes.

Le fonctionnement de ce réseau de capteurs découle à l'évidence de ce qui précède.

Un autre exemple d'application d'un récepteur selon l'invention est représenté en figure 8, le récepteur 70 étant dans ce cas associé à un réseau de capteurs intrinsèques quasi-répartis sur une même fibre optique 12, qui peut propager quelques modes. Une source 10 de lumière à faible longueur de cohérence injecte un seul mode à l'extrémité de cette fibre, qui comprend des points 72 de couplage intermodal, permettant de coupler le mode injecté à un autre mode. Ces deux modes n'ayant pas les mêmes constantes de propagation, des signaux interférométriques sont générés dans la fibre 12, chacun avec une différence de marche associée. Les longueurs des différents tronçons de fibre sont telles que la différence de marche entre modes est supérieure à la longueur de cohérence de la source. Le mélange des modes matérialise l'extrémité du réseau de capteurs formé dans la fibre optique 12. Ce mélange est par exemple réalisé, comme représenté en figure 8, par un analyseur 74 orienté à 45° des axes neutres de la fibre si l'on utilise deux modes de polarisation, ou bien par un filtre spatial si l'on considère des modes transversaux. Une fibre optique 76 de liaison, qui peut être monomode ou multimode, relie l'analyseur 74 ou le filtre spatial au récepteur 70 selon l'invention. Cette fibre de liaison 76 n'a pas d'influence sur le système.

Le flux lumineux émis par la source 10, et dont le spectre est codé par les différents interféromètres définis par les points de couplage 72, est automatiquement démultiplexé par le récepteur selon l'invention, qui peut être du type représenté dans les figures 2, 3 et 6. On obtient les phases des signaux interférométriques générés dans la fibre optique 12, et les différences successives entre les signaux de phase obtenus permettent d'obtenir les informations de phases relatives aux différents tronçons de fibre optique compris entre les points de couplage intermodal 72.

Un réseau de capteurs de ce type a déjà été décrit dans la demande de brevet français 90 01345 de la demanderesse, dont le contenu est ici incorporé par référence.

Un autre exemple de réalisation d'un tel réseau de capteurs a été représenté en figure 9. Dans cet exemple, l'extrémité du réseau de capteurs n'est pas matérialisée par un analyseur (cas des modes de polarisation) ou par un filtre spatial (cas des modes transverses), mais par une rotation de 45° des axes neutres de la fibre optique en aval du dernier point de couplage 72 (cas des modes de polarisation) ou par un désalignement transversal de cette partie de la fibre.

Dans le premier cas, l'analyseur 74 peut être intégré au récepteur en étant placé juste après la lentille d'entrée de ce récepteur. Il est alors orienté de façon à ce que ses axes soient confondus avec ceux de la partie finale de la fibre optique 12.

Dans le cas de deux modes transverses, le désalignement transversal de la fibre optique 12 permet de réaliser le mélange des modes, et une courbure de la fibre optique permet de supprimer le mode d'ordre le plus élevé. La sélection peut également avoir lieu au moyen d'un filtre spatial intégré au récepteur.

Le système représenté en figure 9 peut également être réalisé sans rotation des axes neutres de la partie de la fibre optique 12 située en aval du dernier point de couplage 72. Dans ce cas, l'extrémité du réseau de capteurs est matérialisée par l'analyseur 74, et le système est sensible à la fibre optique de liaison entre le réseau de capteurs et le récepteur. L'analyseur est alors orienté à 45° des axes neutres de la fibre optique de liaison.

On a représenté en figure 10 une autre variante de réalisation d'un réseau de capteurs intrinsèques quasi-répartis dans une fibre optique 12. La lumière émise par la source 10 est injectée dans un mode de polarisation dans la fibre 12, qui est du type à maintien de polarisation, et ce mode est couplé à un autre mode en chaque point de couplage 72. L'extrémité aval de la fibre optique 12 est reliée à un récepteur 76, comprenant une lentille d'entrée 32, un cube 78 séparateur de polarisation, deux miroirs fixes 36, 38 recevant les faisceaux séparés par le cube 78, l'un 36 de ces miroirs étant à surface réfléchissante plane, l'autre 38 étant à surface réfléchissante étagée, et deux lames quart d'onde 80 interposées entre le cube séparateur de polarisation 78 et les miroirs 36 et 38, respectivement.

En sortie, un analyseur 82, dont les axes sont à 45° des axes neutres de la fibre optique 12, est interposé entre le cube séparateur 78 et des lentilles 46 focalisant les fractions de flux lumineux fournies par le récepteur sur des photodétecteurs 50.

L'ensemble réseau de capteurs-récepteur ne forme qu'un seul interféromètre, et le récepteur compense les diverses différences de marche générées dans le réseau de capteurs. Le cube 78 permet de séparer les polarisations, chacune dans un bras du système interférométrique.

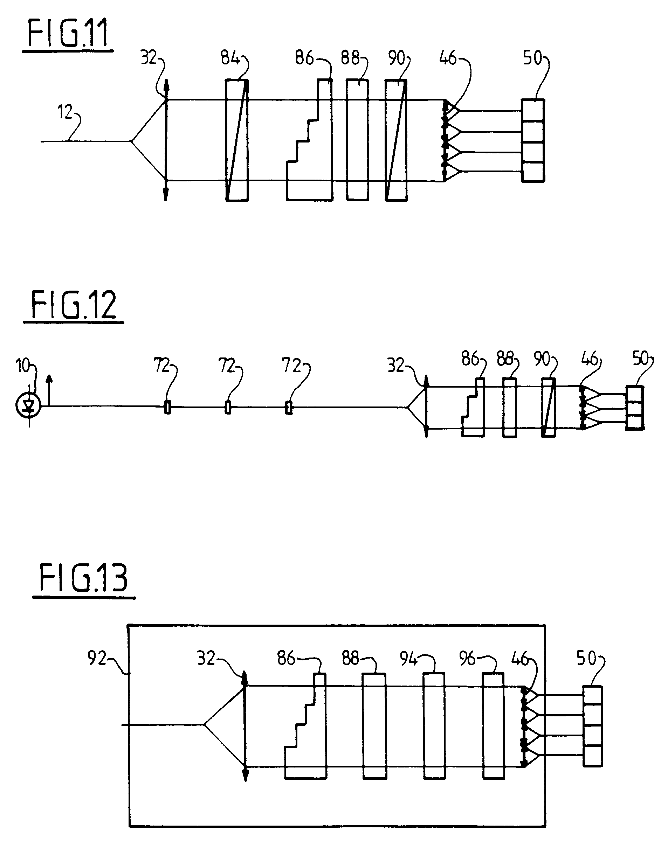

Une autre variante de réalisation d'un récepteur selon l'invention est représentée en figure 11 et comprend une lentille d'entrée 32, transformant le flux lumineux fourni par une fibre optique 12 en un faisceau de rayons sensiblement parallèles, un polariseur 84, une lame 86 de matériau biréfringent à différentes épaisseurs, un modulateur de phase 88 à effet élasto-optique ou électro-optique, un analyseur 90 et des lentilles 46 focalisant les différentes fractions de flux lumineux sur des photorécepteurs 50. Le polariseur 84 et l'analyseur 90 ont leurs axes à 45° de ceux de la lame biréfringente 86. Celle-ci a une structure étagée à différentes épaisseurs, semblable à celle de la lame transparente 56 représentée en figure 3, et peut être réalisée de la même façon, par adhérence moléculaire de lamelles de matière biréfringente sur une lame support. Il faut que ces lamelles aient leurs axes neutres confondus. On peut les réaliser par exemple en calcite, qui a de très bonne caractéristique d'adhérence moléculaire et présente une forte biréfringence.

Les zones de différentes épaisseurs de la lame 86 définissent les fractions de flux lumineux dans lesquelles sont générées les différences de marche optique correspondant à celles du réseau de capteurs associé.

Le modulateur de phase 88 est ici du type élasto-optique ou électro-optique, modulant la biréfringence d'un matériau. Dans ce cas, les axes correspondant à la biréfringence sont alignés sur ceux de la lame 86.

Le récepteur de la figure 11 peut être utilisé par exemple avec un réseau de capteurs du type représenté en figure 7. Les fibres de liaison sont alors multimodes ou à maintien de polarisation, la polarisation dans la fibre étant sur un axe neutre.

Lorsque le réseau de capteurs est du type représenté en figure 8, il suffit de le relier par une fibre optique à maintien de polarisation, dont les axes sont confondus avec ceux de l'analyseur 74, à un récepteur du type représenté en figure 11, comprenant ou non le polariseur d'entrée 84. Dans ce cas, les axes de la lame biréfringente 86 sont à 45° de ceux de la fibre de liaison, et aussi à 45° de ceux de l'analyseur de sortie 90.

Lorsque le réseau de capteurs est du type représenté en figure 9, on peut utiliser le récepteur de la figure 11, avec le polariseur 84 aligné sur un axe neutre de la fibre biréfringente.

On peut également utiliser un réseau de capteurs du type de celui représenté en figure 9, mais sans rotation des axes neutres de la fibre en aval du dernier point 72 de couplage intermodal. L'extrémité du réseau de capteurs est alors matérialisée par le polariseur 84 du récepteur de la figure 11, dont les axes sont à 45° des axes neutres de la fibre 12.

Dans ce cas également, le système global peut avoir la configuration représentée en figure 12. Le récepteur comprend alors la lentille d'entrée 32, la lame de matière biréfringente 86, le modulateur de phase 88 et l'analyseur de sortie 90, ainsi que les lentilles de sortie 46 et les photodétecteurs 50.

L'ensemble réseau de capteurs-récepteur ne forme qu'un seul interféromètre comme dans le cas de la figure 10.

Les récepteurs du type représenté dans les figures 11 et 12 peuvent être réalisés par des techniques d'optique intégré et ont alors la configuration représentée en figure 13.

Le récepteur est formé sur un substrat 92 de matière appropriée, du même type que celle décrite pour le substrat 68 de la figure 6, et comporte des fonctions optiques correspondant à des guides optiques, aux lentilles 32 et 46, à la zone 86 de biréfringence différente de celle du substrat, au modulateur de phase 88, à un coupleur TE-TM 94 et à un polariseur 96 aligné sur un axe neutre de la zone 86. Le guidage optique est réalisé par diffusion de titane et/ou par échange protonique.

L'ensemble du coupleur TE-TM (du type 50:50 de préférence) et du polariseur 96 joue le rôle d'un analyseur orienté à 45°. On pourrait également utiliser un analyseur orienté à 45° des axes neutres en sortie du substrat, à la place de cet ensemble.

Si nécessaire, on peut également prévoir sur la substrat 92, entre la lentille d'entrée 32 et la zone biréfringente 86, un autre ensemble formé d'un polariseur et d'un coupleur TE-TM pour jouer le rôle d'un polariseur d'entrée orienté à 45° des axes neutres.

Le composant optique jouant le rôle de la lame biréfringente 86 à différentes épaisseurs peut être obtenu par échange protonique et diffusion de titane.

Par ailleurs, et comme déjà indiqué plus haut, l'ensemble lentilles 46 - fibres optiques - photodétecteurs 50 pourrait être avantageusement remplacé par une barrette de détecteurs CCD..

De façon générale, l'invention permet de générer simultanément, dans un seul système récepteur qui peut être un circuit optique intégré, des différences de marche optique correspondant à celles d'un réseau de capteurs à codage de modulation spectrale, et de démultiplexer automatiquement en parallèle les signaux fournis par les différents capteurs du réseau.

## Revendications

1. Récepteur de démultiplexage parallèle pour un réseau de capteurs optiques interférométriques à codage de modulation spectrale, qui sont éclairés par une source (10) de lumière à faible longueur de cohérence pour générer des différences de marche optique fonctions des valeurs d'au moins une grandeur physique à laquelle ils sont soumis, ces différences de marche et leurs différences étant supérieures à la longueur de cohérence de la source de lumière (10), et qui transmettent des flux lumineux à un récepteur de type interférométrique susceptible de générer des différences de marche correspondant à celles des capteurs, la différence entre la différence de marche dans chaque capteur et celle correspondante dans le récepteur étant inférieure à la longueur de cohérence de la source (10), caractérisé en ce qu'il comprend un système interférométrique unique dans lequel sont agencés des moyens (38, 56, 86) générant simultanément les différences de marche précitées sur des fractions dudit flux lumineux, et des photodétecteurs (50) de sortie pour recevoir lesdites fractions de flux lumineux sous forme de signaux interférométriques dont chacun a une phase proportionnelle à la différence entre la différence de marche générée par un capteur (18) associé et la différence de marche générée par les moyens (38, 56, 86) précités dans une fraction correspondante du flux lumineux.

2. Récepteur selon la revendication 1, caractérisé en ce qu'il comprend des lentilles (46) de focalisation desdites fractions de flux lumineux sur les photodétecteurs (50) ou sur des extrémités de fibres optiques (48) menant à ces photodétecteurs.

3. Récepteur selon la revendication 1 ou 2, caractérisé en ce qu'il comprend des moyens (52, 88) appliquant une modulation sinusoïdale ou en rampe aux différences de marche générées dans le récepteur, et un circuit de démodulation (54) dont les entrées sont reliées aux sorties des photodétecteurs (50), ces moyens comprenant par exemple un modulateur de phase ou un miroir à déplacement modulé.

4. Récepteur selon l'une des revendications précédentes, caractérisé en ce qu'il comprend un interféromètre de type Michelson à deux miroirs fixes (36, 38) dont l'un présente une série de zones réfléchissantes (40, 42, 44), parallèles et étagées situées à des niveaux différents, définissant les fractions précitées du flux lumineux et générant les différences de marche précitées.

5. Récepteur selon l'une des revendications 1 à 3, caractérisé en ce qu'il comprend un interféromètre de type Michelson à deux miroirs fixes (36, 38) devant l'un desquels est placé une lame transparente (56) à structure étagée, par exemple en verre, présentant des zones (58, 60, 62) d'épaisseurs différentes traversées par le flux lumineux, définissant les fractions précitées de ce flux et générant les différences de marche précitées.

6. Récepteur selon la revendication 4 ou 5, caractérisé en ce que lesdites zones sont formées de lames (66) d'épaisseurs différentes, fixées sur un support (64) par adhérence moléculaire.

7. Récepteur selon l'une des revendications 1 à 3, caractérisé en ce qu'il comprend une lame (86) de matériau biréfringent traversée par le flux lumineux passant dans le récepteur, cette lame étant à structure étagée pour présenter différentes épaisseurs définissant lesdites fractions du flux lumineux et générant les différences de marche précitées.

8. Récepteur selon la revendication 7, caractérisé en ce que les différentes épaisseurs de la lame (86) sont formées par des lamelles de matériau biréfringent d'épaisseurs différentes, fixées par adhérence moléculaire sur un support avec une même orientation de leurs axes neutres.

9. Récepteur selon la revendication 7 ou 8, caractérisé en ce que ladite lame (86) de matériau biréfringent est placée entre un polariseur (84) et un analyseur (90) dont les axes sont à 45° des axes du matériau biréfringent.

10. Récepteur selon l'une des revendications précédentes, caractérisé en ce qu'il est constitué d'un circuit optique intégré, comprenant un substrat (68, 92) comportant les fonctions optiques nécessaires, réalisées par des techniques de diffusion, d'échange protonique, de bombardement ionique, d'attaque chimique ou autre.

11. Récepteur selon la revendication 10, caractérisé en ce que le substrat (68, 92) comporte également un modulateur de phase (52, 88) du type électro-optique ou élasto-optique.

12. Récepteur selon la revendication 10 ou 11, caractérisé en ce que les fonctions optiques intégrées comprennent une zone de biréfringence différente (86) à différentes longueurs et un coupleur de modes TE-TM (94) associé à un polariseur (96) aligné sur un axe neutre de la zone biréfringente, ou un analyseur orienté à 45° des axes neutres de cette zone.

13. Récepteur selon l'une des revendications 10 à 12, caractérisé en ce que le substrat (68) est en matériau biréfringent du type LiNb03 ou LiTa03.

14. Récepteur selon l'une des revendications 10 à 12, caractérisé en ce que le substrat (68, 92) est en matériau semi-conducteur du type GaAs ou GaInAsP par exemple, et porte également des composants intégrés formant des photodétecteurs (50) et un circuit de démodulation (54).

15. Récepteur selon l'une des revendications précédentes, caractérisé en ce qu'il est associé à des capteurs interférométriques (18) agencés par exemple en échelle ou en étoile.

16. Récepteur selon l'une des revendications 1 à 14, caractérisé en ce qu'il est associé à des capteurs intrinsèques quasi-répartis sur une fibre optique (12) à quelques modes ou à maintien de polarisation, comportant des points (72) de couplage intermodal.

## Claims

1. A parallel demultiplexing receiver for an array of interferometer optical sensors having spectral modulation coding, the receivers being illuminated by a source (10) of light having a short coherence length in order to generate optical path length differences that are functions of the values of at least one physical magnitude to which the sensors are subjected, said path length differences and the differences between them being greater than the coherence length of the light source (10), the sensors transmitting light fluxes to an interferometer type receiver suitable for generating path-length differences corresponding to the path length differences of the sensors, the difference between the path length difference of each sensor and the corresponding difference in the receiver being less than the coherence length of the source (10), the receiver being characterized in that it comprises a single interferometer system in which means (38, 56, 86) are arranged that simultaneously generate the above-specified path-length differences over fractions of said light fluxes, and output photodetectors (50) receiving said light flux fractions in the form of interferometer signals, each of which has phase proportional to the difference between the path-length difference generated by the associated sensor (18) and the path-length difference generated by the above-specified means (38, 56, 86) in a corresponding fraction of the light flux.

2. A receiver according to claim 1, characterized in that it includes lenses (46) for focusing said light flux fractions onto the photodetectors (50) or onto the ends of optical fibers (48) leading to said photodetectors.

3. A receiver according to claim 1 or 2, characterized in that it comprises means (52, 88) for applying sinewave or sawtooth modulation to the path-length differences generated in the receiver, and a demodulator circuit (54) whose inputs are connected to the outputs of the photodetectors (50), said means comprising, for example, a phase modulator or a mirror having modulated displacement.

4. A receiver according to any preceding claim, characterized in that it comprises a Michelson type interferometer having two fixed mirrors (36, 38) one of which has a series of parallel and staggered reflecting zones (40, 42, 44) situated at different levels, defining the above-specified light flux fractions and generating the above-specified path-length differences.

5. A receiver according to any one of claims 1 to 3, characterized in that it comprises a Michelson type interferometer having two fixed mirrors (36, 38) with a transparent plate (56) having a stepped structure being placed in front of one of them, the plate being made of glass, for example, and having zones (58, 60, 62) of different thicknesses through which the light flux passes, thereby defining the above-specified fractions of said flux and generating the above-specified path-length differences.

6. A receiver according to claim 4 or 5, characterized in that said zones are formed by plates (66) of different thicknesses, which are fixed on a support (64) by molecular adhesion.

7. A receiver according to any one of claims 1 to 3, characterized in that it comprises a plate (86) of birefringent material having the light flux that passes into the receiver passing therethrough, said plate being of a stepped structure to present different thicknesses defining said light flux fractions and generating the above-specified path-length differences.

8. A receiver according to claim 7, characterized in that the different thicknesses of the plate (86) are formed by slides of birefringent material having different thicknesses, which slides are fixed by molecular adhesion to a support so that their neutral axes are oriented in the same direction.

9. A receiver according to claim 7 or 8, characterized in that said plate (86) of birefringent material is placed between a polarizer (84) and an analyzer (90) having axes at 45° to the axes of the birefringent material.

10. A receiver according to any preceding claim, characterized in that it is constituted by an integrated optical circuit comprising a substrate (68, 92) including the required optical functions made by the following techniques: diffusion; proton exchange; ion bombardment; chemical etching; etc.

11. A receiver according to claim 10, characterized in that the substrate (68, 92) also includes a phase modulator (52, 88) of the electro-optical or the elasto-optical type.

12. A receiver according to claim 10 or 11, characterized in that the integrated optical functions comprise a zone (86) of differing birefringence at different wavelengths, and a TE-TM mode coupler (94) associated with a polarizer (96) in alignment with the neutral axis of the birefringence zone, or an analyzer oriented at 45° to the neutral axes of said zone.

13. A receiver according to any one of claims 10 to 12, characterized in that the substrate (68) is made of a birefringent material of the LiNbO₃ or of the LiTaO₃ type.

14. A receiver according to any one of claims 10 to 12, characterized in that the substrate (68, 92) is made of a semiconductor material of the GaAs or of the GaInAsP type, for example, and also carries integrated components that form photodetectors (50) and a demodulator circuit (54).

15. A receiver according to any preceding claim, characterized in that it is associated with interferometer sensors (18) arranged in a ladder or in a star configuration, for example.

16. A receiver according to any one of claims 1 to 14, characterized in that it is associated with intrinsic sensors substantially distributed over a length of optical fiber (12) having a few modes or in which polarization is maintained, and including points (72) of intermode coupling.

## Patentansprüche

1. Empfänger zum parallelen Demultiplexen für ein Netz von optischen interferometrischen Sensoren mit spektraler Modulationskodierung, die von einer Lichtquelle (10) mit kurzer Kohärenzlänge beleuchtet sind, um optische Weglängendifferenzen als Funktionen von Werten wenigstens einer physikalischen Größe, der sie unterworfen sind, zu erzeugen, wobei diese Weglängendifferenzen größer als die Kohärenzlänge der Lichtquelle (10) sind, und die Lichtströme auf einen interferometerartigen Empfänger übertragen, der zum Erzeugen von Weglängendifferenzen, die denjenigen der Sensoren entsprechen, geeignet ist, wobei die Differenz zwischen der Weglängendifferenz in jedem Sensor und der entsprechenden im Empfänger kleiner als die Kohärenzlänge der Quelle (10) ist, **dadurch gekennzeichnet**, daß er eine einzelne Interferometereinrichtung aufweist, in der Mittel (38, 56, 86), die gleichzeitig die erwähnten Weglängendifferenzen bei Bruchteilen des Lichtstroms erzeugen, und ausgangsseitige Photodetektoren (50) ausgebildet sind, um die Bruchteile des Lichtstroms in der Form von interferometrischen Signalen zu erfassen, von denen jedes über eine zur Differenz zwischen der von einem zugeordneten Sensor (18) erzeugten Weglängendifferenz und einer durch die erwähnten Mittel (38, 56, 86) erzeugten Weglängendifferenz proportionale Phase bei einem entsprechenden Bruchteil des Lichtstroms verfügt.

2. Empfänger nach Anspruch 1, dadurch gekennzeichnet, daß er Linsen (46) aufweist, die der Fokussierung der Bruchteile des Lichtstroms auf die Photodetektoren (50) oder auf die Enden der zu den Photodetektoren führenden Lichtleitfasern (48) dienen.

3. Empfänger nach Anspruch 1 oder 2, dadurch gekennzeichnet, daß er Mittel (52, 88), die die im Empfänger erzeugten Weglängendifferenzen sinusförmig oder rampenförmig modulieren, und eine Demodulationsschaltung (54) aufweist, deren Eingänge an die Ausgänge der Photodetektoren (50) angeschlossen sind, wobei diese Mittel beispielsweise einen Phasenmodulator oder einen Spiegel mit modulierbarer Verschiebung umfassen.

4. Empfänger nach einem der vorstehenden Ansprüche, dadurch gekennzeichnet, daß er ein Michelson-artiges Interferometer mit zwei festen Spiegeln (36, 38) umfaßt, von denen einer eine Reihe von parallelen versetzten reflektierenden Zonen (40, 42, 44) aufweist, die in unterschiedlichen Ebenen angeordnet sind, die die erwähnten Bruchteile des Lichtstroms bilden und die die erwähnten Weglängendifferenzen erzeugen.

5. Empfänger nach einem der Ansprüche 1 bis 3, dadurch gekennzeichnet, daß er ein Michelson-artiges Interferometer mit zwei festen Spiegeln (36, 38) umfaßt, wobei vor einen dieser Spiegel ein transparentes Plättchen (56) mit abgestuftem Aufbau, z.B. aus Glas, angeordnet ist, das vom Lichtstrom durchquerte Zonen (58, 60, 62) unterschiedlicher Dicke aufweist, die die erwähnten Bruchteile dieses Stromes bilden und die die erwähnten Weglängendifferenzen erzeugen.

6. Empfänger nach Anspruch 4 oder 5, dadurch gekennzeichnet, daß die Zonen von auf einer Halterung (64) durch molekulare Adhäsion befestigten Plättchen (66) unterschiedlicher Dicke gebildet sind.

7. Empfänger nach einem der Ansprüche 1 bis 3, dadurch gekennzeichnet, daß er ein Plättchen (86) aus doppelbrechendem Material aufweist, das von dem in den Empfänger eintretenden Lichtstrom durchquert ist, wobei dieses Plättchen über einen abgestuften Aufbau verfügt, um verschiedene Dicken zur Verfügung zu stellen, die die Bruchteile des Lichtstroms bilden und die die Weglängendifferenzen erzeugen.

8. Empfänger nach Anspruch 7, dadurch gekennzeichnet, daß die verschiedenen Dicken des Plättchens (86) von kleinen Plättchen aus doppelbrechendem Material und von unterschiedlicher Dicke gebildet sind, die mit derselben Ausrichtung ihrer neutralen Achsen durch molekulare Adhäsion auf einer Halterung befestigt sind.

9. Empfänger nach Anspruch 7 oder 8, dadurch gekennzeichnet, daß das Plättchen (86) aus doppelbrechendem Material zwischen einem Polarisator (84) und einem Analysator (90) angeordnet ist, dessen Achsen sich in einem Winkel von 45 Grad zu den Achsen des doppelbrechenden Materials befinden.

10. Empfänger nach einem der vorstehenden Ansprüche, dadurch gekennzeichnet, daß er von einer integrierten optischen Schaltung gebildet ist, die ein Substrat (68, 92) einschließt, das die notwendigen optischen Funktionen umfaßt, die durch Diffusion, Protonenaustausch, Ionenbestrahlung, chemische Bearbeitung oder andere Techniken hergestellt sind.

11. Empfänger nach Anspruch 10, dadurch gekennzeichnet, daß das Substrat (68, 92) weiterhin einen Phasenmodulator (52, 88) in elektrooptischer oder élasto - optischer Ausführung umfaßt.

12. Empfänger nach Anspruch 10 oder 11, dadurch gekennzeichnet, daß die integrierten optischen Funktionen einen Bereich (86) unterschiedlicher Doppelbrechung mit verschiedenen Längen und einen TE-TM-Modenkoppler (94) umfassen, der einem auf eine neutrale Achse des doppelbrechenden Bereichs ausgerichteten Polarisator (96) oder einem unter 45 Grad zu den neutralen Achse dieses Bereichs ausgerichteten Analysator zugeordnet ist.

13. Empfänger nach einem der Ansprüche 10 bis 12, dadurch gekennzeichnet, daß das Substrat (68) aus doppelbrechendem LiNb0₃- oder LiTa0₃-artigem Material ist.

14. Empfänger nach einem der Ansprüche 10 bis 12, dadurch gekennzeichnet, daß das Substrat (68, 92) aus halbleitendem, beispielsweise GaAs- oder GaInAsP-artigem Material ist und ferner integrierte Bauelemente, die Photodetektoren (50) und eine Demodulationsschaltung (54) bilden, trägt.

15. Empfänger nach einem der vorstehenden Ansprüche, dadurch gekennzeichnet, daß er interferometrischen Sensoren (18) zugeordnet ist, die beispielsweise leiterförmig oder sternförmig angeordnet sind.

16. Empfänger nach einem der Ansprüche 1 bis 14, dadurch gekennzeichnet, daß er auf einer mehrmodigen oder polarisationserhaltenden Lichtleitfaser (12), die Punkte (72) für eine Kopplung zwischen Moden umfaßt, quasi-verteilten, inneren Sensoren zugeordnet ist.
